# EUROPEAN PATENT SPECIFICATION

(11) **EP 1 349 442 B1**
(45) Date of publication and mention of the grant of the patent: **02.08.2006**
(21) Application number: 01271139.6
(22) Date of filing: 20.12.2001
(51) Int. Cl.: A01B 63/00, A01B 25/00, A01B 31/00

(54) **ADJUSTMENT DEVICE FOR AN AGRICULTURAL MACHINE**
EINSTELLVORRICHTUNG FÜR EINE LANDWIRTSCHAFTLICHE MASCHINE
DISPOSITIF DE REGLAGE POUR MACHINE AGRICOLE

(30) Priority: 21.12.2000 SE 0004766
(43) Date of publication of application: 08.10.2003
(73) Proprietor: Väderstad-Verken AB, 590 21 Väderstad (SE)
(72) Inventor: STARK, Crister, S-590 21 Väderstad (SE)
(74) Representative: Stein, Jan Anders Lennart
(86) International application number: PCT/SE2001/002852
(87) International publication number: WO 2002/049414

(56) References cited:
- EP-A1- 0 181 425
- EP-A1- 0 776 598
- EP-A2- 0 171 719
- EP-A2- 0 177 024
- GB-A- 2 184 331

## Description

The present invention relates to an adjustment device for an agricultural machine, according to the pre-characterising portion of claim 1. Such an adjustement device is known from SE-C-510727.

Agricultural machines, such as drilling machines, comprise a plurality of tools which work and prepare the soil before material such as seed or fertilizer is to be placed in the soil. Such tools include spring boards and harrow tines which can be arranged in a plurality of parallel rows on the agricultural machine. Such tools must function satisfactorily under all soil conditions to ensure that the seeds which are sown will be able to grow and develop to yield a satisfactory crop.

The spring board, which is also referred to as clod crusher or crossboard, levels out the soil and crushes clods of earth before the soil is harrowed or worked in some other way. The spring board comprises a plurality of resilient rod elements which are arranged in a line and can be connected to one another by means of a stabilizing bar. The spring board is arranged at an angle to the soil so that it slopes forwards in the direction of travel, which means that a bank of earth is built up in front of the clod crusher. The size of the bank of earth depends inter alia on the springs board to the soil and on the speed of the agricultural. The nature of the earth also affects the size of the bank of earth. The size of the bank of earth gives an indication of how the spring board is working the soil. If the bank of earth is too small, the soil is not being worked sufficiently and the soil is not levelled out sufficiently. If the bank of earth is too large, the soil is being worked too much, causing increased fuel consumption of the vehicle pulling the agricultural machine because this increases the power that has to be exerted by the pulling vehicle. To achieve the desired working of the soil, the angle of the spring board in relation to the soil can be adjusted manually from the driver's cab of the pulling vehicle.

The harrow tines are made up of a resilient rod element which is provided with a point at the end directed towards the soil. The harrow tines break up the earth before seed and fertilizer are placed in the soil. The depth to which the harrow tines are to be introduced into the soil in order to achieve satisfactory working of the soil depends on the properties of said soil. When the harrow tines are driven in the soil, a wash forms behind each harrow tine. The size of this wash gives an indication of how the harrow tines are working the soil. If the wash is too small, the soil is not being worked sufficiently, and, if the wash is too great, the soil is being worked too much, which means increased fuel consumption in the vehicle pulling the agricultural machine. In order to obtain a desired working of the soil, the depth of the harrow tines in the soil can be adjusted manually from the driver's cab of the pulling vehicle.

However, it has been found to be difficult to set the correct angle of the spring board and the correct depth of the harrow tines in order to obtain satisfactory working of the soil. The drives who is manoeuvring the agricultural machine is occupied with driving the pulling vehicle and with monitoring a number of functions of the agricultural machine and the pulling vehicle. In addition, the drive speed has increased in recent years, which has caused difficulties for the driver to turn around to check how the spring board and the harrow tines are working the soil.

It is an object of the present invention to solve the above mentioned problems in order thereby to achieve a satisfactory working of the soil. A further object of the invention is to make it easier to manoeuvre the agricultural machine.

This is achieved by means of an adjusting for an agricultural machine of the initially mentioned kind, comprising the features of the characterising portion of claim 1.

By means of such an adjustment device, the driver manoeuvring the agricultural machine does not have to check the way the spring board and harrow tines are working the soil, but instead he can concentrate on driving the pulling vehicle. The adjustment device ensures that the soil is satisfactorily worked and prepared before seed and fertilizer are placed in the soil, there by increasing the possibilities of the sown seed to grow and develop into a crop with satisfactory properties.

An adjustment device as such is certainly know from GB-A-2 184 331, however only for detecting the playing depth of a rotory plow. The invention will in the following be described in greater detail on the basis of embodiments shown in the attached drawings, where
Fig. 1 illustrates a first embodiment of the invention,
Fig. 2 illustrates a second embodiment of the invention,
Fig. 3 ilustrates a third embodiment of the invention,
Fig. 4 illustrates the third embodiment of the invention in perspective,
Fig. 5 illustrates a fourth embodiment of the invention,
Fig. 6 illustrates a fifth embodiment of the invention, and
Fig. 7 illustrates a wiring diagram for controlling the adjustment device according to the invention.

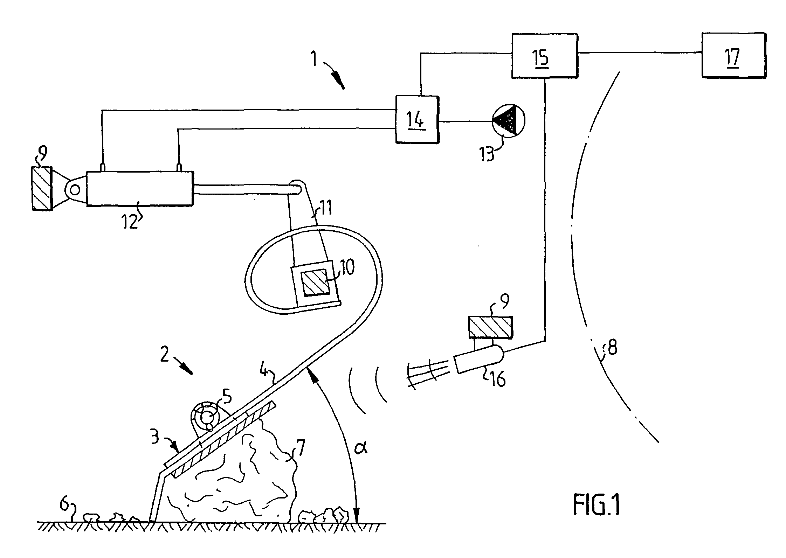

Fig. 1 shows a first embodiment of an adjustment device 1 for an agricultural machine 2 according to the present invention. The agricultural machine 2, which is only shown schematically, comprises an tool in the form of a spring board 3. The spring board 3 is made up of a plurality of resilient rod elements 4 which are arranged in line and are connected to one another by means of a stabilizing bar 5. The spring board 3 is arranged at an angle α in relation to the soil 6, so that it slopes forwards in the direction of travel, which means that a bank of earth 7 builds up in front of the spring board 3 when the agricultural machine 2 is driven forwards by a pulling vehicle 8. The pulling vehicle 8 is shown schematically in Fig. 1. As was mentioned in the introductory part of the description, the size of the bank of earth 7 depends on the angle α of the spring board 3 in relation to the soil 6 and on the speed of the agricultural machine 2. The size of the bank of earth 7 gives an indication to how the spring board 3 is working the soil 6. If the bank of earth 7 is too small, the soil 6 is not being worked sufficiently, and if the bank of earth 7 is too large, the soil 6 is being worked too much, which causes increased fuel consumption in the vehicle 8 pulling the agricultural machine 2, since increased tractive power is required.

To achieve a satisfactory working of the soil 6, of the angle α of the spring board 3 in relation to the soil 6 can be adjusted by means of the adjustment device 1 according to the present invention. The rod element 4 of the spring board 3 is connected to an axle 10 which can pivot on the frame 9 of the agricultural machine 2 and which is connected by means of an arm 11 to a power member in the from of a hydraulic cylinder 12. The hydraulic cylinder 12 is connected to the frame 9 of the agricultural machine 2. By pivoting the axle 10 by means of the hydraulic cylinder 12, the angle α of the spring board 3 in relation to the soil 6 is changed. If the axle 10 is pivoted clockwise, as is shown in Fig. 1, the angle α between the spring board 3 and the soil 6 is reduced, which causes that the force with which the spring board 3 bears against the soil 6 reduces, which in turn causes the spring board 3 to work the soil 6 less, and the bank of earth 7 in front of the spring board 3 will thus become smaller. If the axle 10 is turned counter-clockwise, the condition will be the opposite.

The hydraulic cylinder 12 is acted upon by a pressure force 13. A valve 14 arranged between the pressure source 13 and the hydraulic cylinder 12 adjusts the hydraulic flow to the cylinder 12. The valve 14 and thus the hydraulic cylinder 12 are controlled by a control unit 15 receiving information from a sensor 16 and from a control panel 17 arranged in the pulling vehicle 8.

The sensor 16, shown in the embodiment of Fig. 1 is a non-tactile sensor 16, which is connected to the frame 9 of the agricultural machine 2 and is directed towards the lower portion of the spring board 3 where a bank of earth 7 is formed when the agricultural machine 2 is drawn by the pulling vehicle 8. Since the size of the bank of earth 7 provides an indication of how satisfactorily the spring board 3 is working the soil 6, the sensor 16 detects the size of the bank of earth and sends signals concerning this to the control unit 15 which, in response to this information, sends signals to the valve 14 in order to activate the cylinder 12, which thus changes the angle α of the spring board 3 in relation to the soil 6 by pivoting the axle 10.

The sensor 16 can consist of an ultrasonic sensor which detects the distance between the bank of earth 7 and the sensor 16. The shorter the distance between the sensor 16 and the bank of earth 7, the larger the bank of earth 7. The sensor is thus placed on the frame 9 of the agricultural machine 2 in front of the spring board 3. By inputting a parameter via the control panel 17, which parameter corresponds to a desired value of the size of the bank of earth 7, the control unit 15 will send signals to the valve 14 so that the cylinder 12 adjusts the angle α of the spring board 3 and thus the size of the bank of earth 7, such that the size of the bank of earth 7 comes closer to and finally corresponds to the desired value.

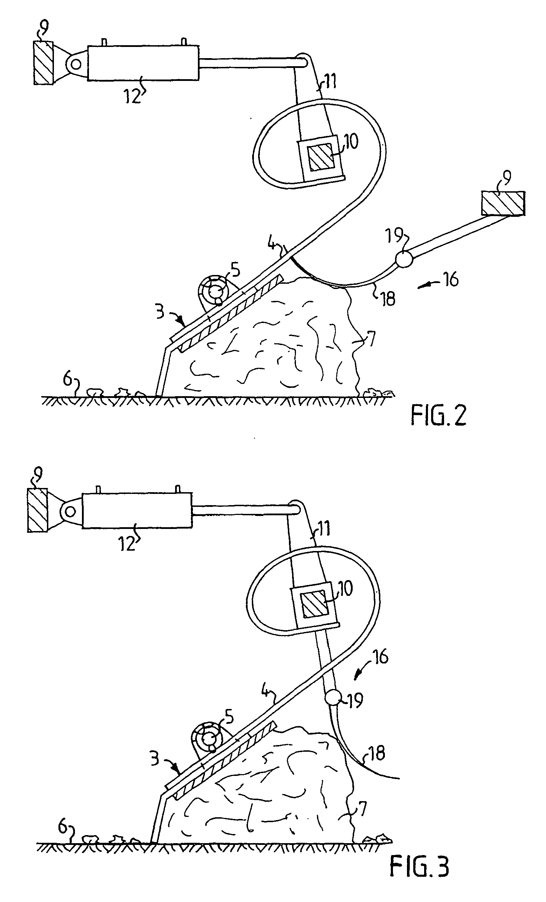

Fig. 2 shows a second embodiment of the invention in which the sensor 16 comprises a detecting element 18 which is designed to bear against the soil 6 displaced by the tool 3. The detecting element 18 can consist of a tine or a flap which can pivot about an angle sensor 19. The more the detecting element 18 shown in Fig. 2 is pivoted clockwise, the larger the bank of earth 7. The sensor 16 and the hydraulic cylinder 12 are intended to be coupled to a control unit 15 and valve 14, respectively, as is shown in Fig. 1.

Fig. 3 shows a third embodiment of the invention in which the sensor 16 with the detecting element 18 is arranged on the pivotable axle 10. The sensor 16 extends between two rod elements 4 so that the detecting element 18 can come into conduct with the bank of earth 7. The advantage of arranging the sensor 16 directly on the pivotable axle 10 is that the sensor 16 turns together with the axle 10 when the latter is pivoted and when the angle α of the spring board 3 in relation to the soil is changed.

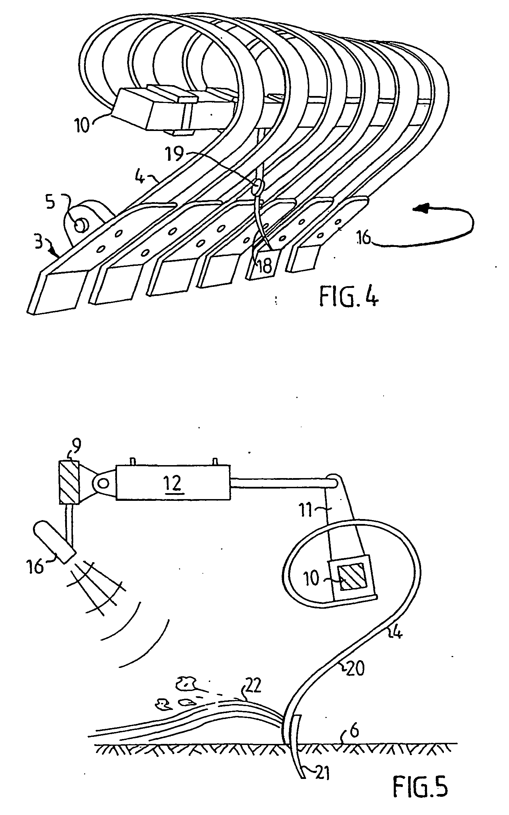

Fig. 4 shows the third embodiment in perspective. It can clearly be seen how the sensor 16 extends between two rod elements 4. To achieve satisfactory monitoring of the size of the bank of earth 7, it is conceivable to arrange a plurality of sensors 16 along the spring board 3. The signals which are sent from the sensors 16 can be processed in the control unit 15, and an image of the appearance of the bank of earth 7 along the spring board 3 can be obtained. It is also possible for the spring board 3 to be divided up along its length into a pluratily of sections which can be be pivoted independently of one another about axles 10.

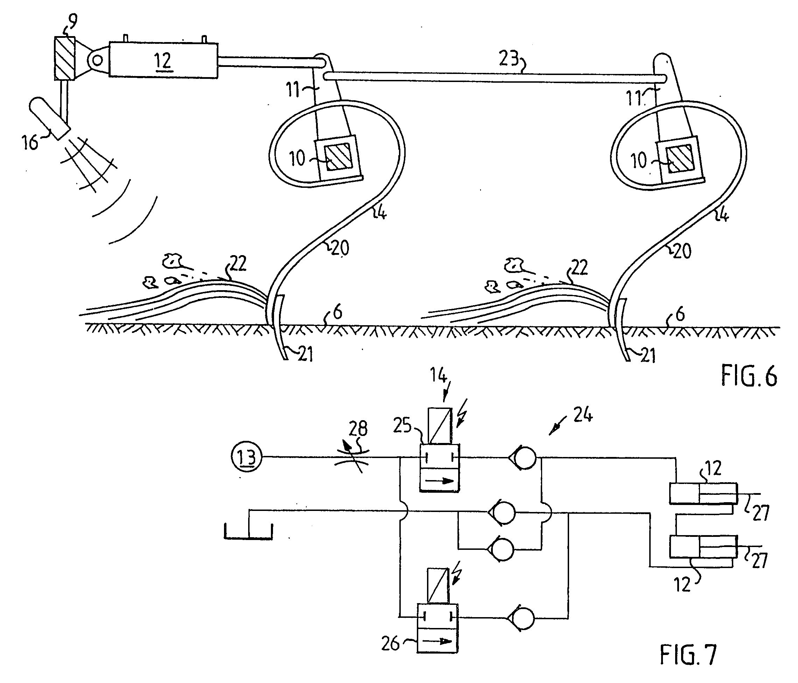

Fig. 5 shows o fourth embodiment of the present invention. What distinguishes this embodiment from the one shown in Fig. 1 is that the tool comprises of harrow tines 20. The harrow tines 20 comprise a resilient rod element 4 which is provided with a point 21 at the end directed towards the soil 6. As was mentioned in the introductory part of the description, the harrow tines 20 break up the soil 6 before seed and fertilizer are placed in the soil 6. The depth to which the harrow tines 20 are to be introduced into the soil 6 to achieve satisfactory working of the soil depends on the character of the soil 6 and on the speed of the agricultural machine 2. To achieve a desired working of the soil 6, the depth of the harrow tines 20 in the soil can be adjusted by a hydraulic cylinder 12 in the same way as is described in connection with the first embodiment.

When the harrow tines 20 are driven in the soil 6, a wash 22 is formed behind each harrow tooth 20. The size of the wash 22 provides an indication to how the harrow tines 20 are working the soil 6. A sensor 16 is arranged behind one or more of the harrow tines 20 and is directed towards the wash 22 formed behind the harrow tooth 20. The sensor 16 can comprise an ultrasonic sensor for non-tactical detection. The sensor 16 and the hydraulic cylinder 12 are intended to be coupled to a control unit 15 and valve 14, respectively, as is shown in connection with the first embodiment. If the wash 22 is too small, the soil 6 is not being worked sufficiently, and, if the wash 22 is too great, the soil 6 is being worked too much, which causes increased fuel consumption in the vehicle 8 pulling the agricultural machine 2, since greater power is required to pull the harrow tines 20. By inputting a parameter via the control panel 17, which parameter corresponds to a desired value of the size of the wash 22, the control unit 15 will send signals to the valve 14 so that the cylinder 12 adjusts the depth of the harrow tines 20 in the soil 6, and thus the size of the wash 22, such that the size of the wash 22 comes closer to and finally corresponds to the desired value.

Fig. 6 shows a fifth embodiment of the invention in which two rows of tools 20 and been coupled together by means of a linking bar 23. The axle 10 of the rear row comprises an arm 11 connected to a hydraulic cylinder 12, When the cylinder 12 pivots the rear axle 10, the pivoting movement is transmitted to the front axle 10 via the linking bar 23. A sensor 16 is arranged to detect the siol 6 displaced by the tool 20, as has been described in connection with the embodiments above. In the embodiment shown in Fig. 4, the tool comprises of harrow tines 20, but the tool can alternatively comprises of spring boards 3. The sensor 16 comprises a non-tactile sensor 16 in the embodiment shown, but it is also possible for the sensor 16 to comprise a detecting element 18 which is arranged to bear against the soil 6 displaced by the tool, as is described in connection with the illustrative embodiment shown in Fig. 2.

Fig. 7 shows a wiring diagram 24 for controlling the adjustment device 1 according to the invention. The wiring diagram 24 shows two working members in the form of hydraulic cylinders 12 are intended to be coupled to the tools 3,20 of the agricultural machine 2. The valve 14 comprises of two two-way valves 25, 26 which are controlled electrically. By actuating the first two-way valve 25, each piston rod 27 in the cylinders 12 is displaced out of the respective cylinder 12. When the second two-way valve 26 is actuated, each piston rod 27 is displaced inwards into the cylinders 12. Arranged between the pressure source 13 and the first two-way valve 25 there is a variable throttle valve 28, so that the speed of the flow of the hydraulic fluid to the cylinders 12 can be varied. By increasing the through-flow area of the throttle valve 28, the tool 3, 20 can be adjusted more quickly if the size of the bank of earth 7 or wash 22 is outside a predetermined interval and, in the same way, the tools 3, 20 can be adjusted more slowly if the through-flow area is reduced when the size of the bank of earth 7 or wash 22 is within a predetermined interval. Alternatively, this adjustment can be achieved by allowing the flow which controls the two-way valves 25, 26 to pulsate. Another possible way of achieving this adjustment is to use so-called proportional valves (not shown). Under certain circumstances, such as when working earth of a particular nature or when servicing the agricultural machine 2, it may be desirable to uncouple the action of the adjustment device on the tools 3, 20 so that these can be adjusted manually.

The tools 3, 20 may be adjusted individually, which means that each tool 3, 20 is provided with a power member 2 and a sensor 16, so that the position of the tool 3, 20 in relation to the soil can be adjusted independently of the position of other tools 3, 20 in relation to the soil. Each element is here to be understood as a group of interconnected tools 3, 20 or individual tools 3, 20.

## Claims

1. Adjustment device for at least one tool (3, 20) of an agricultural machine, the tool being in the form of a spring board member (3) or harrow tine (20) for working the soil, **characterised in that** at least one power unit (12) is provided for adjusting the tool (3, 20) in relation to the soil (6), a control unit (15) associated with a sensor (16) being adapted to control the power unit (12) in response to the sensor (16), said sensor (16) detecting soil while being worked and displaced by the tool (3, 20).

2. Device according to claim 1, wherein it comprises said at least one tool.

3. Device according to claim 1 or 2, wherein the sensor (16) is a non-tactile sensor, such as an ultrasonic sensor.

4. Device according to any one of claims 1 to 3, wherein a plurality of tools (3, 20) are arranged in a row.

5. Device according to claim 4, wherein at least two substantially parallel rows of tools (3, 20) are adapted to be arranged on the agricultural machine.

6. Device according to any one of the preceding claims, wherein the power unit comprises a hydraulic cylinder (12).

7. Device according to any one of the preceding claims, wherein the tools (3, 20) are adjustable in sections or individually.

8. Device according to any one of the preceding claims, wherein the tool is designed as a harrow S-tine (20).

9. Device according to any one of claims 1-7, wherein the sensor (16) comprises a detecting element (18) which is placed in such a way that the soil (7) is displaced by the tool (3) is allowed to contact the detecting element.

10. Agricultural machine comprising at least one adjustment device according to any one of the preceding claims.

## Patentansprüche

1. Einstellvorrichtung für wenigstens ein Gerät (3, 20) einer landwirtschaftlichen Maschine, wobei das Gerät die Form eines Federplattenelements (3) oder einer Eggenzinke (20) für die Bodenbearbeitung aufweist, **dadurch gekennzeichnet, dass** zum Einstellen des Geräts (3, 20) bezüglich des Bodens (6) wenigstens eine Krafteinheit (12) vorgesehen ist, wobei eine einem Sensor (16) zugeordnete Steuereinheit (15) so ausgelegt ist, dass sie die Krafteinheit (12) ansprechend auf den Sensor (16) steuert, der in Bearbeitung befindlichen und von dem Gerät (3, 20) verschobenen Boden erfasst.

2. Vorrichtung nach Anspruch 1, die wenigstens ein Gerät aufweist.

3. Vorrichtung nach Anspruch 1 oder 2, bei welcher der Sensor (16) ein nicht taktiler Sensor, beispielsweise ein Ultraschallsensor, ist.

4. Vorrichtung nach einem der Ansprüche 1 bis 3, bei welcher eine Vielzahl von Geräten (3, 20) in einer Reihe angeordnet ist.

5. Vorrichtung nach Anspruch 4, bei welcher wenigstens zwei im Wesentlichen parallele Reihen von Geräten (3, 20) für das Anbringen an der landwirtschaftlichen Maschine ausgelegt sind.

6. Vorrichtung nach einem der vorhergehenden Ansprüche, bei welcher die Krafteinheit einen Hydraulikzylinder (12) aufweist.

7. Vorrichtung nach einem der vorhergehenden Ansprüche, bei welchem die Geräte (3, 20) abschnittsweise oder einzeln einstellbar sind.

8. Vorrichtung nach einem der vorhergehenden Ansprüche, bei welchem das Gerät als S-Eggenzinke (20) gebaut ist.

9. Vorrichtung nach einem der Ansprüche 1 bis 7, bei welchem der Sensor (16) ein Messelement (18) aufweist, das so angeordnet ist, dass der von dem Gerät (3) verschobene Boden (7) das Messelement berühren kann.

10. Landwirtschaftliche Maschine mit wenigstens einer Einstellvorrichtung nach einem der vorhergehenden Ansprüche.

## Revendications

1. Un dispositif de réglage pour au moins un outil (3, 20) de machine agricole, lequel outil étant en forme d'un membre de planche à ressort (3) ou dent de herse (20) pour le travail du sol, **caractérisé en ce qu'**au moins une unité motrice (12) est prévue pour ajuster l'outil (3, 20) par rapport au sol (6), une unité régulatrice (15) associée avec un détecteur (16) étant adaptée pour commander l'unité motrice (12) en réponse au détecteur (16), ledit détecteur (16) détectant le sol alors qu'il est travaillé et déplacé par l'outil (3, 20).

2. Un dispositif selon la revendication 1, lequel comporte ledit au moins outil.

3. Un dispositif selon la revendication 1 ou 2, dans lequel le détecteur (16) est un détecteur non tactile, tel qu'un détecteur ultrasonique.

4. Un dispositif selon l'une quelconque des revendications 1 à 3, dans lequel une pluralité d'outils (3, 20) est agencée en rangée.

5. Un dispositif selon la revendication 4, dans lequel deux rangées d'outils (3, 20) substantiellement parallèles sont adaptées pour être agencées sur la machine agricole.

6. Un dispositif selon l'une quelconque des revendications précédentes, dans lequel l'unité motrice comporte un cylindre hydraulique (12).

7. Un dispositif selon l'une quelconque des revendications précédentes, dans lequel les outils (3, 20) sont réglables en sections ou individuellement.

8. Un dispositif selon l'une quelconque des revendications précédentes, dans lequel l'outil est conçu comme une dent de herse en S (20).

9. Un dispositif selon l'une quelconque des revendications 1 à 7, dans lequel le détecteur (16) comporte un élément de détection (18) qui est placé de manière à ce que le sol (7) étant déplacé par l'outil (3) puisse entrer en contact avec l'élément de détection.

10. Une machine agricole comportant au moins un dispositif de réglage selon l'une quelconque des revendications précédentes.
